# EUROPEAN PATENT SPECIFICATION

(11) **EP 2 404 796 B1**
(45) Date of publication and mention of the grant of the patent: **11.11.2015**
(21) Application number: 11170964.8
(22) Date of filing: 22.06.2011
(51) Int. Cl.: B60T 8/32, B60T 8/36, B62K 11/04

(54) **Motorcycle**
Motorrad
Motocyclette

(30) Priority: 06.07.2010 JP 2010153902
(43) Date of publication of application: 11.01.2012
(73) Proprietor: KAWASAKI JUKOGYO KABUSHIKI KAISHA, Kobe shi, Hyogo 650-8670 (JP)
(72) Inventor: Tamura, Hiroshi, Hyogo, 673-8666 (JP)
(74) Representative: Hoffmann Eitle

(56) References cited:
- EP-A1- 1 820 710
- JP-A- 2007 055 297
- JP-A- 2007 076 555
- JP-A- 2008 074 206
- JP-A- 2009 132 337
- US-A1- 2009 243 376

## Description

### FIELD OF THE INVENTION

The present invention relates to a motorcycle. More specifically, the present invention relates to a motorcycle which includes a main frame having a pair of right and left frame members, an engine arranged below the main frame, and a hydraulic braking device.

### BACKGROUND OF THE INVENTION

In a hydraulic braking device of a motorcycle, typically, a brake lever arranged on a steering handle and a brake pedal arranged near a step are provided with master cylinders. The master cylinders and braking portions arranged to front and rear wheels, e.g., hydraulic disc braking devices, are connected to a hydraulic unit via brake pipes. A brake operational force transmitted from the master cylinders to the hydraulic unit is amplified by the hydraulic unit and is transmitted to calipers of the hydraulic disc braking devices.

As a specific example of the hydraulic unit, there is known an ABS unit for antilock control (antilock brake system unit), which has a plurality of valves and incorporates a hydraulic pump for generating or increasing a brake hydraulic pressure. The ABS unit is typically arranged in a rear frame below a seat (Japanese Patent Application Publication (JP-B) No. 7-88158).

In addition, the conventional ABS unit is fixed onto a frame by one bracket. When the ABS unit is detached at the time of maintenance, firstly, the seat is detached, and then the bolt which fixes the attached portion of the bracket is unscrewed, and finally the ABS unit is taken out upward.

Further, aside from above mentioned the conventional art, there is also known a motorcycle which has a hydraulic braking device in which a pressure regulating unit including valves and hydraulic pumps which generate a hydraulic pressure are distributively arranged in different locations (Japanese Patent Application Laid-Open (JP-A) No. 2009-241797).
EP 18 207 710 A1 discloses features falling under the preamble of claim 1.
JP 2007/055297 A, US 2009/243376 A1, JP 2009/132337 A, and
JP 2007/076555 A are further prior art documents.

### DISCLOSURE OF THE INVENTION

As in the former conventional art, when the ABS unit which is integrally provided with the hydraulic pump and the valves is arranged in the rear portion of the vehicle away from the engine, the heavy articles or parts for the vehicle are distributively arranged, resulting in inhibiting mass concentration.

In addition, according to the specifications(SPEC) of the motorcycle, the rear shock absorber can largely occupy the space below the seat. In such case, it is difficult to secure the arranging space for the ABS unit and the detaching operation becomes difficult.

As in the latter conventional art, when the valves and the hydraulic pumps are distributivebly arranged in different locations, it takes time to perform the attaching operation and the brake piping becomes complicated.

The present invention has been made in view of the above problems, and an object of the present invention is to provide a motorcycle including a hydraulic braking device, which can easily detach a hydraulic unit from the side of the vehicle while being capable of maintaining the compact ability of the vehicle.

To address the above problems, the present invention provides a motorcycle having the features of claim 1.

In the above invention of the motorcycle, preferably, the following configurations are adopted.
(a) The main frame has an attaching portion for attaching the hydraulic unit, and the attaching portion is formed in the portion except for the outermost end surface of the main frame.
(b) According to the invention, the hydraulic unit is attached to the main frame (41) via a bracket (50), the bracket (50) includes a main bracket member (51) attached to the main frame (41), and a sub-bracket member (52) to which the hydraulic unit is attached, is detachably attached to the main bracket member (51), and wherein the hydraulic unit can be detached from the main bracket member (51) together with the sub-bracket member (52).
(c) In the attaching configuration using the two-divided type of bracket (50), the main bracket member (51) has an inside attached portion (62) arranged in an inside position in the vehicle width direction with respect to the attached hydraulic unit and attached to the main frame (41), and at least one of the main bracket member (51) and the sub-bracket member (52) has an outside attached portion (61) arranged in an outside position in the vehicle width direction with respect to the attached hydraulic unit and attached to the main frame (41).
(d) At least one of the main bracket member (51) and the sub-bracket member (52) has a front attached portion (61) arranged in a front position in the front-rear direction with respect to the attached hydraulic unit and attached to the main frame (41), and at least one of the main bracket member (51) and the sub-bracket member (52) has a rear attached portion (63) arranged in a rear position in the front-rear direction with respect to the attached hydraulic unit and attached to the main frame (41) .
(e) In addition, one of the front attached portion (61) and the rear attached portion (63), and the inside attached portion (62) are formed to the main bracket member (51), and the other of the front attached portion (61) and the rear attached portion (63) is formed to the sub-bracket member (52).
(f) A joining portion which detachably joins the sub-bracket member (52) to the main bracket member (51) is arranged on the lower side, the front side, or the rear side of the hydraulic unit.

(1) With the present invention, the hydraulic unit including the hydraulic pump is arranged near the engine, specifically, the side of the engine, so that the mass concentration of the vehicle is enabled. Moreover, the ABS unit in the main frame can be detached from the side of the vehicle without detaching the engine from the main frame, so that the maintenance of the hydraulic unit is easy.
(2) The hydraulic unit is arranged inside the main frame, so that the hydraulic unit can be protected from outside.
(3) With the above configuration (a), the attaching portion of the hydraulic unit is formed in the portion except for the outermost end surface of the main frame, so that the appearance of the vehicle can be improved and the attaching portion can be protected. In addition, the distance between the hydraulic unit and the attaching portion can be shorter than when the attaching portion is provided on the outermost end surface of the main frame, so that the supporting strength for the hydraulic unit can be increased.
(4) With the above configuration (b), the bracket is divided into two members, i.e. the main bracket member and the sub-bracket member which can be detached from the main bracket, so that as compared with when a single bracket member is used, it suffices to detach only the sub-bracket member together with the hydraulic unit, so that the detaching is easy.
(5) With the above configuration (c), the main bracket member and the sub-bracket member are arranged, and the inside attached portion and the outside attached portion are provided on both sides in the vehicle width direction, so that the supporting rigidity of the bracket can be increased to strongly support the hydraulic unit. In addition, the joining of the main bracket member and the sub-bracket member is released each other, so that the hydraulic unit can be detached without reaching for the inside attached portion, thereby making the detaching operation easy.
(6) With the above configuration (d), the main bracket member and the sub-bracket member are arranged, and the front attached portion and the rear attached portion are provided on both sides in the front-rear direction, so that the supporting rigidity of the bracket can be increased to strongly support the hydraulic unit.
(7) With the above configuration (e), one of the front attached portion and the rear attached portion and the inside attached portion are formed to the main bracket member, and the other of the front attached portion and the rear attached portion is formed to the sub-bracket member. In the state that the joining of the main bracket member and the sub-bracket member is released each other, the hydraulic unit can be shifted forward or rearward from the main bracket member together with the sub-bracket member, so that the hydraulic unit can be easily detached even in a small space.
(8) With the above configuration (f), a joining portion which detachably joins the sub-bracket member to the main bracket member is arranged on the lower side, the front side, or the rear side of the hydraulic unit, so that the main frame and the engine can be prevented from being an obstacle, whereby the joining portion can be easily reached for to detach the hydraulic unit.

### BRIEF DESCRIPTION OF THE DRAWINGS

Fig. 1 is a plan view of a main frame and an ABS unit (hydraulic unit) of a motorcycle according to the present invention;
Fig. 2 is a plan enlarged view of the left half of the main frame, the engine, and the ABS unit of Fig. 1;
Fig. 3 is a left side view of Fig. 2;
Fig. 4 is a piping schematic diagram of a hydraulic braking device of the motorcycle of Fig. 1;
Fig. 5 is an exploded perspective view of a bracket for attaching the ABS unit;
Fig. 6 is a plan enlarged view showing the attached state of the ABS unit;
Fig. 7 is a left side view of the ABS unit attached to the bracket; and
Fig. 8 is a rear view of Fig. 7.

### DETAILED DESCRIPTION OF THE INVENTION

### [First embodiment]

### (Brake piping configuration)

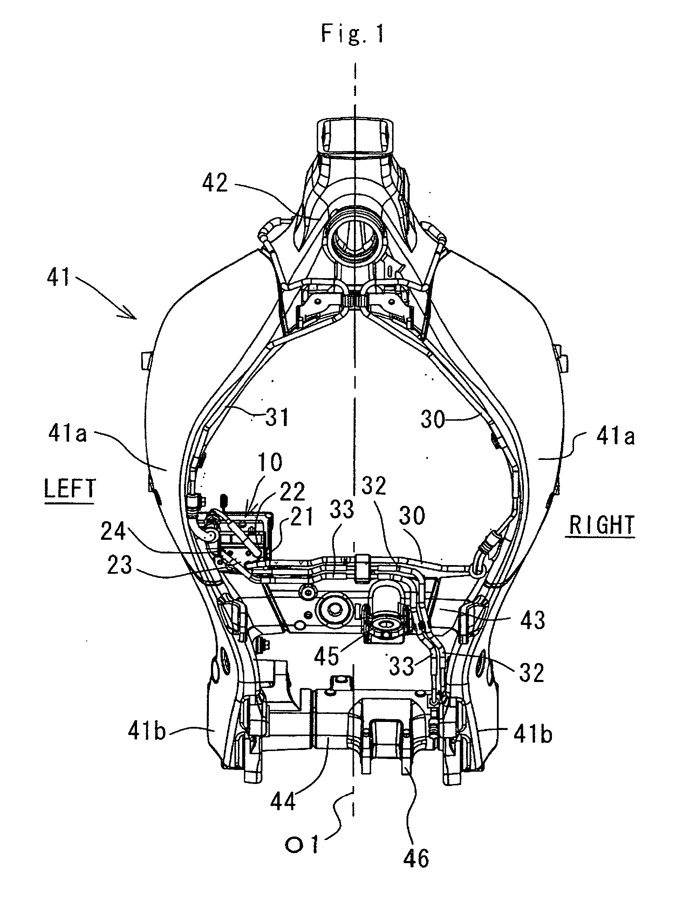

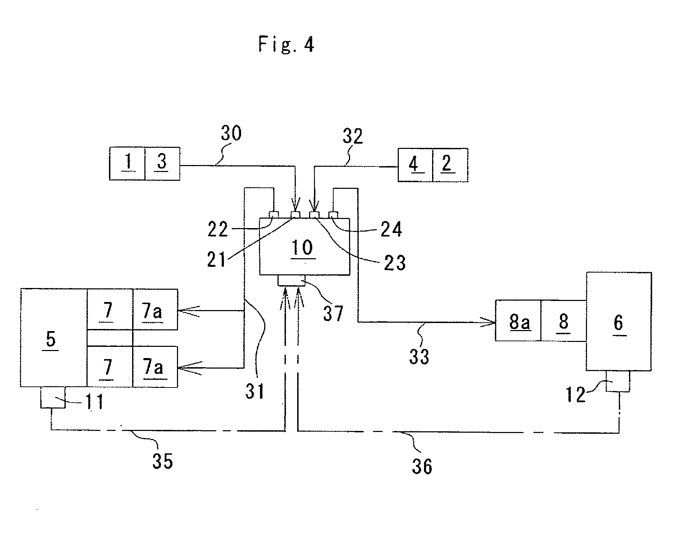

Figs. 1 to 8 show a motorcycle including a hydraulic braking device according to a first embodiment of the present invention. First, the overview of the hydraulic braking device will be described with reference to a brake piping diagram shown in Fig. 4. In Fig. 4, the hydraulic braking device includes, as a brake operating portion, a front wheel brake lever 1 provided on a steering handle, and a brake pedal 2 provided near a right step, the brake lever 1 and the brake pedal 2 being connected to master cylinders 3 and 4, respectively. The hydraulic braking device includes, as a wheel braking portion, a pair of right and left front wheel disc braking devices 7 provided to a front wheel 5, and a rear wheel disc braking device 8 provided to a rear wheel 6, the disc braking devices 7 and 8 being provided with calipers 7a and 8a for sandwichably pressing the brake discs, respectively.

In this embodiment, a hydraulic unit which increases or generates a brake hydraulic pressure and controls an operation with a brake fluid includes an antilock controlling ABS unit (antilock brake system unit) 10, and rotation speed sensors 11 and 12 which detect the rotation speeds of the front wheel 5 and the rear wheel 6, respectively.

The master cylinder 3 of the brake lever 1 is connected to a front wheel input port 21 of the ABS unit 10 via a front wheel operation side brake pipe 30. The master cylinder 4 of the brake pedal 2 is connected to a rear wheel input port 23 of the ABS unit 10 via a rear wheel operation side brake pipe 32.

A front wheel output port 22 of the ABS unit 10 is connected to the right and left calipers 7a for braking the front wheel via a front wheel operation side brake pipe 31. A rear wheel output port 24 of the ABS unit 10 is connected to the caliper 8a for braking the rear wheel via a rear wheel operation side brake pipe 33.

The rotation speed sensors 11 and 12 are connected to an electric signal connection terminal portion 37 of the ABS unit 10 via lead wires 35 and 36, respectively.

### (The arrangement, configuration, and attachment of the ABS unit 10)

Fig. 1 is a plan view of a main frame 41 of the motorcycle. The main frame 41 has a pair of right and left frame members 41a and 41a extended rearward from a head pipe portion (head box portion) 42, like V shape (or so as to be widen toward the end). The rear ends of the frame members 41a and 41a are integrally formed with swing arm bracket portions 41b and 41b extended downward. The upper ends of the swing arm bracket portions 41b and 41b are coupled by an upper cross member 43. The lower ends of the swing arm bracket portions 41b and 41b are coupled by a lower cross member 44.

The upper cross member 43 is integrally formed with a supporting portion 45 which rotatably supports the front end (upper end) of a rear shock absorber (not shown). The lower cross member 44 is integrally formed with a boss portion 46 which supports a link mechanism (not shown) coupled to the rear end (lower end) of the rear shock absorber. The supporting portion 45 and the boss portion 46 are formed in the position shifted rightward from a vehicle width centerline C1.

In plan view, the ABS unit 10 for the hydraulic braking device is arranged in the region surrounded by the outermost end surface or lines of the frame members 41a and 41a and the upper cross member 43. In this embodiment, the ABS unit 10 is located near the left frame member 41a and near the front side of the upper cross member 43.

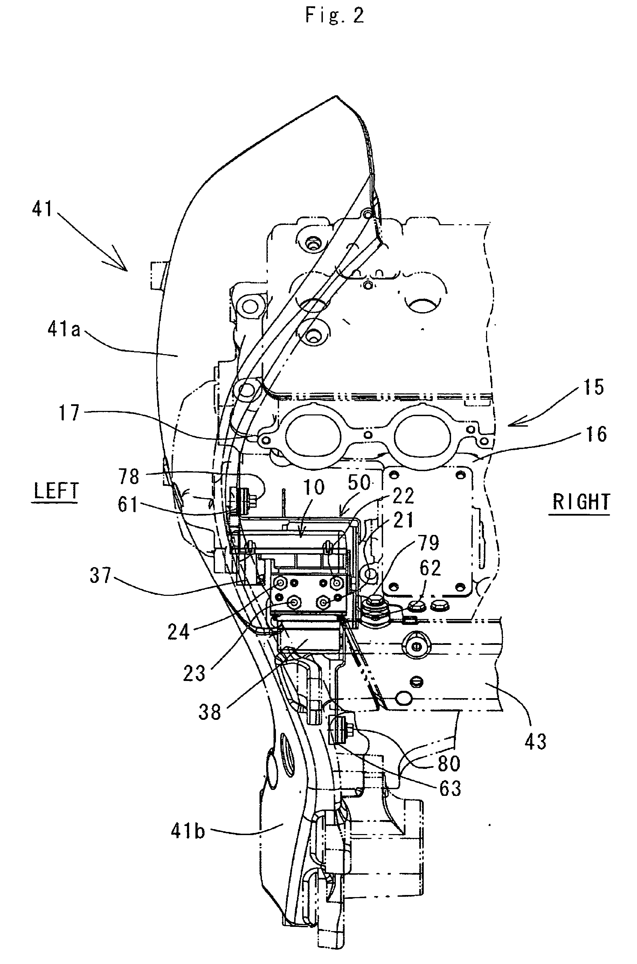

Fig. 2 is an enlarged plan view of the left half of the main frame 41. The input ports 21 and 23 and the output ports 22 and 24 are provided to the upper surface of the ABS unit 10. The front wheel operation side input port 21 and the front wheel operation side output port 22 are located in the right half portion of the upper surface of the ABS unit 10. The rear wheel operation side input port 23 and the rear wheel operation side output port 24 are located in the left half portion of the upper surface of the ABS unit 10. In addition, the input ports 21 and 23 are located at the rear end of the upper surface of the ABS unit 10, and the output ports 22 and 24 are located at the front end of the upper surface of the ABS unit 10.

The ports 21, 22, 23, and 24 are arranged in the upper portion of the ABS unit 10, as described above, and are arranged in the region inward of the main frame 41. In addition, the brake pipes (not shown) connected to the ports 21, 22, 23, and 24 are extended inward from the outermost end line of the main frame 41.

The ABS unit 10 unitably includes a hydraulic pump 38 for pressurizing the brake fluid discharged from the output ports 22 and 24, various valves (not shown) for opening and closing the ports, an ECU (not shown) for electric brake control, and the electric signal connection terminal portion 37.

The hydraulic pump 38 is provided so as to be projected rearward. The connection terminal portion 37 is arranged on the left side of the unit body portion, and is provided so that the connection terminals are directed to the rear and can be connected to the terminals of the lead wires from the rear.

Returning to Fig. 1, the front wheel operation side brake pipe 30 connected to the front wheel operation side input port 21 crosses rightward in the main frame 41 along the upper cross member 43, is extended forward along the upper surface of the right frame member 41a to the head pipe portion 42, and is extended from the head pipe portion 42 to the master cylinder 3 of the brake lever 1, as described above (see Fig. 4). The front wheel operation side brake pipe 31 connected to the front wheel operation side output port 22 is extended forward along the upper surface of the left frame member 41a to the head pipe portion 42, and is extended from the head pipe portion 42 to the calipers 7a for braking the front wheel, as described above (see Fig. 4).

The rear wheel operation side brake pipe 32 connected to the rear wheel operation side input port 23 crosses rightward in the main frame 41 along the upper cross member 43, and is extended rearward and downward to the master cylinder 4 of the brake pedal 2, as described above (see Fig. 4). The rear wheel operation side brake pipe 33 connected to the rear wheel operation side output port 24 crosses rightward in the main frame 41 along the upper cross member 43, is extended rearward and downward, and is extended rearward along a swing arm (not shown) to the caliper 8a for braking the rear wheel, as described above (see Fig. 4).

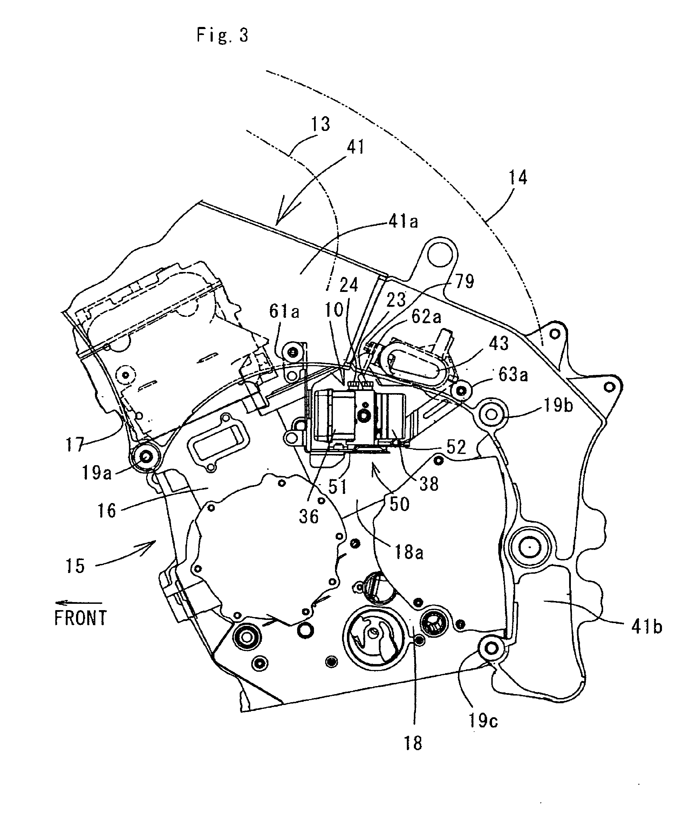

Fig. 3 is a left side view of Fig. 2. In Fig. 3, an engine 15 is arranged below the main frame 41. The engine 15 is, e.g., a parallel four-cylinder engine, and as is known, includes a cylinder block 16 at the front end thereof, a cylinder head 17 fastened to the upper surface of the cylinder block 16, and a crankcase 18 extended rearward from the lower end of the cylinder block 16. The crankcase 18 integrally has a transmission chamber, and is provided on the upper surface of the right half portion with a balancer chamber or a breather chamber 18a projected upward. In the engine 15, the front end of the cylinder block 16 and the rear upper end of the crankcase 18 are attached to engine attaching portions 19a and 19b of the right and left main frame members 41a with bolts, and the rear lower end of the crankcase 18 is attached to an engine attaching portion 19c of the swing arm bracket portion 41b with a bolt.

An air cleaner box 13 is arranged above the cylinder head 17. A fuel tank 14 is arranged from the upper side of the rear portion of the air cleaner box 13 to the rear end of the main frame 41.

The ABS unit 10 is arranged in the space between the main frame member 41a and the crankcase (left half portion) 18 in the up-and-down direction, as seen from the left side of the vehicle, and is arranged rearward of the cylinder block 16, so that the entire ABS unit 10 can be identified from the left side. Further, in the actual motorcycle, the ABS unit 10 is partially covered by a decorative cover (not shown) covering the side surface of the vehicle.

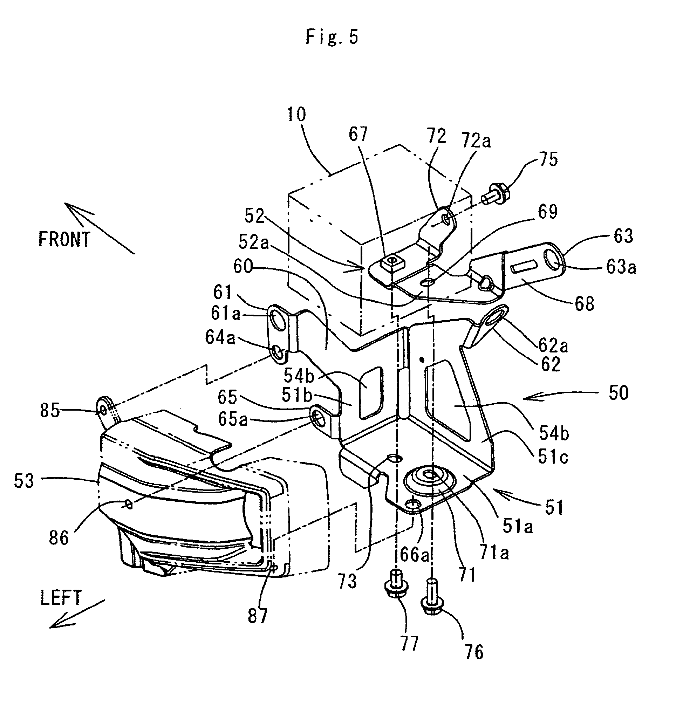

Fig. 5 is an exploded perspective view of a bracket 50 for attaching the ABS unit 10. The bracket 50 has an iron main bracket member 51 and an iron sub-bracket member 52. A resin unit cover 53 covering part of the left side surface, the rear surface, and the upper surface of the ABS unit 10 is attached to the main bracket member 51 from the left side. Further, the unit cover 53 is shown only in Fig. 5, and is not shown in other drawings (Figs. 1 to 4 and Fig. 6).

The main bracket member 51 integrally has a substantially horizontal bottom wall 51a, a front wall 51b raised substantially vertically from the front end of the bottom wall 51a, and a right side wall (inside wall) 51c raised substantially vertically from the right end (inside end in the vehicle width direction) of the bottom wall 51a. Lightening holes 54b are formed in the front wall 51b and the right side wall 51c for weight reduction.

The left upper end (outside upper end) of the front wall 51b is integrally formed with an arm 60 extended leftward and upward. The end of the arm 60 is integrally formed with a first attached portion 61 having a first attached hole 61a. The first attached portion 61 has an attached surface orthogonal to the right-left direction. In addition, the lower side of the first attached hole 61a is formed with a first cover attaching hole 64a for attaching the front upper end of the unit cover 53.

A second attached portion 62 having a second attached hole 62a is formed in the substantial middle position in the front-rear direction at the upper end of the right side wall 51c so as to be projected upward. The second attached portion 62 has an attached surface substantially orthogonal to the right side wall 51c and tilted rearward.

The left lower end of the front wall 51b is integrally formed with a cover attaching portion 65 extended forward. The cover attaching portion 65 is formed with a second cover attaching hole 65a for attaching the front lower end of the cover 53.

To fix the lower surface of the ABS unit 10 and a bottom wall 52a of the sub-bracket member 52, the rear half portion of the bottom wall 51a is formed with a first unit fixing portion 71. The first unit fixing portion 71 is formed in a truncated cone shape raised upward, and is formed with a first unit fixing hole 71a. The front half portion of the bottom wall 51a is formed with a sub-bracket member attaching hole 73. The unit fixing hole 71a and the sub-bracket member attaching hole 73 are long holes which are long in the front-rear direction. Further, the left rear end of the bottom wall 51a is formed with a third cover attaching hole 66a for attaching the rear end of the unit cover 53.

A nut (attached portion) 67 for attaching the sub-bracket member 52 to the main bracket member 51 is welded to the front end of the bottom wall 52a of the sub-bracket member 52. The nut 67 is arranged in the position corresponding to the sub-bracket member attaching hole 73 of the bottom wall 51a of the main bracket member 51. The right rear end of the bottom wall 52a of the sub-bracket member 52 is integrally formed with an arm 68 extended rearward and upward. The rear end of the arm 68 is a third attached portion 63 having a third attached hole 63a. The third attached portion 63 has an attached surface orthogonal to the right-left direction. In addition, the bottom wall 52a of the sub-bracket member 52 is formed with a bolt insertion hole 69 for fixing the ABS unit 10 to the main bracket member 51 together with the sub-bracket member 52. The bolt insertion hole 69 is a long hole which is long in vehicle width (the right-left) direction. Further, the right front end of the sub-bracket member 52 is formed with a second unit fixing portion 72 extended rearward and upward. The second unit fixing portion 72 is formed with a second unit fixing hole 72a.

The ABS unit 10 is mounted on the bottom wall 52a of the sub-bracket member 52. A bolt 75 inserted through the second unit fixing hole 72a of the sub-bracket member 52 from the right side is screwed into a female screw hole in the right side surface of the ABS unit 10, so that the right side surface of the ABS unit 10 is fixed to the sub-bracket member 52. A bolt 76 inserted through the first unit fixing hole 71a of the bottom wall 51a of the main bracket member 51 from the lower side is passed through the insertion hole 69 of the bottom wall 52a of the sub-bracket member 52, is screwed into the bottom surface of the ABS unit 10, and is fixed (joined) to the bottom wall 51a of the main bracket member 51 together with the sub-bracket member 52. In addition, the front end of the sub-bracket member 52 is fixed to the main bracket member 51 by screwing a bolt 77 inserted through the sub-bracket member attaching hole 73 from the lower side of the bottom wall 51a of the main bracket member 51 onto the nut 67 of the sub-bracket member 52.

The unit cover 53 is attached to the portions of the first, second, and third cover attaching holes 64a, 65a, and 66a of the main bracket member 51 with bolts (not shown) inserted through a first cover attached hole 85 at the front upper end thereof, a second cover attached hole 86 at the front lower end thereof, and a third cover attached hole 87 at the rear lower end thereof, and nuts (not shown) screwed onto the bolts.

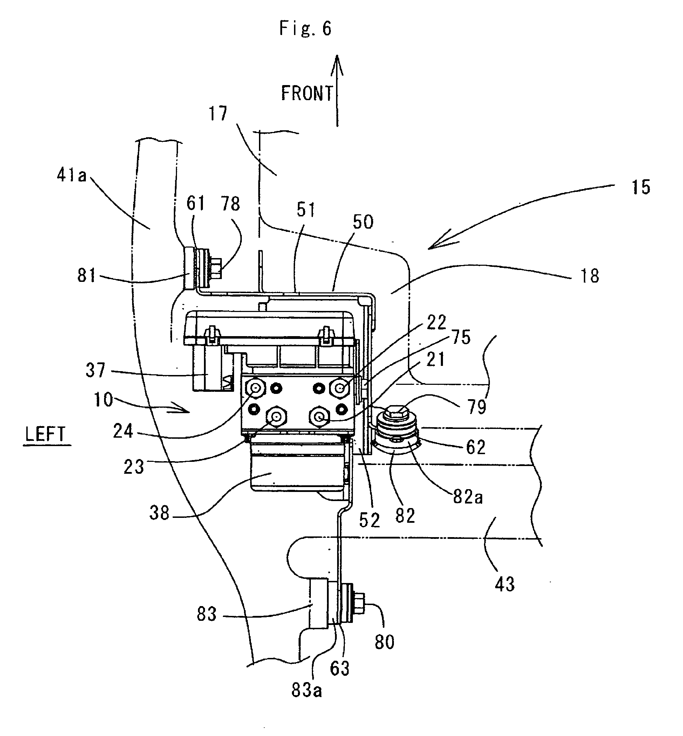

In the entire bracket 50 on which the ABS unit 10 is mounted, the first attached portion 61 at the left front upper end thereof, the second attached portion 62 at the right upper end thereof, and the third attached portion 63 at the right rear end thereof are abutted onto a first attaching portion 81 of the left frame member 41a, a third attaching portion 83 of the swing arm bracket portion 41b, and a second attaching portion 82 of the upper cross member 43, which are shown in Fig. 6, via annular rubber dampers 81a, 82a, and 83a, respectively, and are attached with bolts 78, 79, and 80. The rubber dampers 81a, 82a, and 83a have outer circumference annular grooves. The outer circumference annular grooves are fitted to the inner circumference edges of the first, second, and third attached holes 61a, 62a, and 63a of the bracket 50.

In Fig. 6, the first attaching portion 81 is formed on the right side surface (inner side surface) of the left side frame member 41a, and its position in the front-rear direction is near the rear surface of the cylinder head 17. The second attaching portion 82 is formed on the front surface at the left end of the upper cross member 43. The third attaching portion 83 is formed on the right side surface (inner side surface) of the left swing arm bracket portion 41b, and its position in the front-rear direction is near the rear end of the upper cross member 43.

### (The assembling and attaching operation of the ABS unit 10)

Although the assembling of the ABS unit 10 has been described already, it will be briefly described again with reference to Fig. 5. In Fig. 5, the ABS unit 10 is mounted on the bottom wall 52a of the sub-bracket member 52, and its right side surface is fixed to the sub-bracket member 52 with the bolt 75. Then, the ABS unit 10 is mounted on the bottom wall 51a of the main bracket member 51 together with the sub-bracket member 52, and the lower surface of the ABS unit 10 and the bottom wall 52a of the sub-bracket member 52 are fastened together and fixed to the first unit fixing portion 71 of the bottom wall 51a of the main bracket member 51 with the rear bolt 76 inserted from the lower side. Further, only the front end of the sub-bracket member 52 is fixed to the bottom wall 51a of the main bracket member 51 with the front bolt 77 inserted from the lower side. In addition, the unit cover 53 is fixed to the main bracket member 51 from the left side with three bolts (not shown).

In the assembling operation of the bracket members 51 and 52 and the ABS unit 10, of the three attached portions 61, 62, and 63 of the bracket 50, the first and second attached portions 61 and 62 are formed to the main bracket member 51, and the remaining third attached portion 63 is formed to the sub-bracket member 52. When an error is caused in the manufacturing dimensions of the main bracket member 51 and the sub-bracket member 52, using the first unit fixing hole 71a and the sub-bracket member attaching hole 73, which are long in the front-rear direction, and the bolt attaching hole 69 which is long in the right-left direction, the attaching position of the sub-bracket member 52 to the main bracket member 51 can be adjusted so that the relative positions of the three attached portions 61, 62, and 63 are set accurately.

The ABS unit 10 and the unit cover 53 fitted to the bracket 50, as described above, are arranged in the space between the main frame member 41a and the crankcase 18 in the vertical direction in left side view, as shown in Fig. 3, and are arranged rearward of the cylinder block 16. At this time, a fixed space is secured on the lower side of the bottom wall 51a of the main bracket member 51. Further, in the actual vehicle, as described above, the detachable decorative cover (not shown) is arranged to the side surface downward from the main frame 41, and partially covers the ABS unit 10 from the left side. In addition, as shown in Fig. 1, in plan view, the ABS unit 10 is arranged in the region surrounded by the outermost end line of the right and left frame members 41a and near the front side at the left end of the upper cross member 43.

As shown in Fig. 6, the first, second, and third attached portions 61, 62, and 63 are attached to the first attaching portion 81 on the inner side surface of the left frame member 41a, the second attaching portion 82 on the front surface of the upper cross member 43, and the third attaching portion 83 on the inner side surface of the left frame member 41a with the bolts 78, 79, and 80 via the rubber dampers 81a, 82a, and 83a, respectively.

### (The detaching operation of the ABS unit 10)

In Fig. 6, when the ABS unit 10 is detached from the vehicle for maintenance, the ABS unit 10 is detached from the main bracket member 51 together with the sub-bracket member 52, and is taken out to the left side from the space between the left frame member 41 a and the crankcase 18 in the vertical direction.

This will be specifically described. In Fig. 3, first, the fuel tank 14 covering the upper side of the ABS unit 10 is detached from the main frame 41, and the hydraulic unit 10 is accessed from the upper side to detach the brake pipes. In other words, the interference with the main frame 41 can be prevented to easily detach the brake pipes.

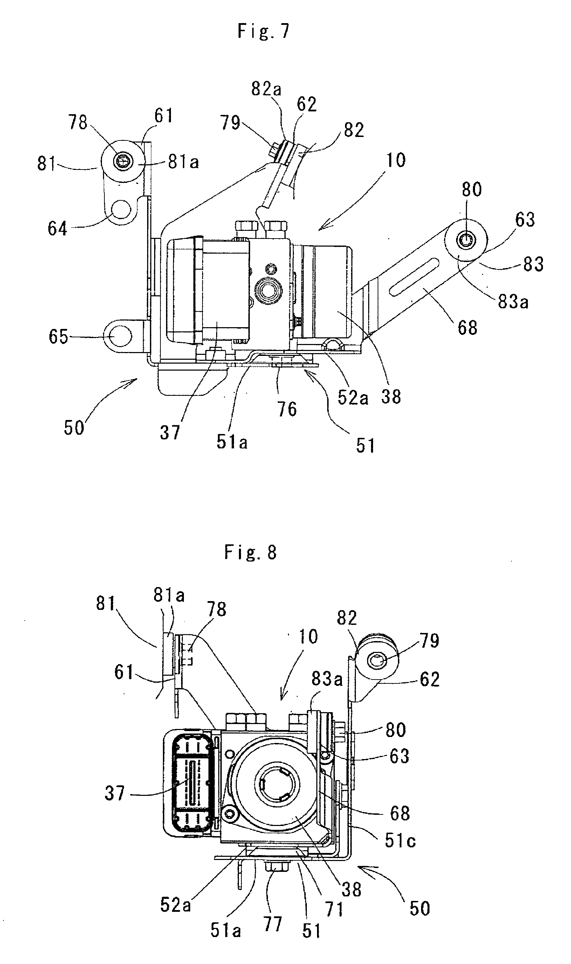

Next, in Figs. 7 and 8, the front and rear bolts 77 and 76 (Fig. 5) inserted from the bottom wall 51a of the main bracket member 51 are unscrewed to the lower side. Then, in Fig. 6, the tool is inserted from the rear upper side of the upper cross member 43 to unscrew the bolt 80 of the third attached portion 63 of the sub-bracket member 52. Thereby, the fixed state of the ABS unit 10 and the sub-bracket member 52 to the main bracket member 51 is released. However, the state that the sub-bracket member 52 and the ABS unit 10 are fastened with the bolt 75 from the right side is held.

The ABS unit 10 and the sub-bracket member 52 which are held fastened, as described above, are tilted slightly rearward so as to be pulled out to the left side of the vehicle. In this case, the main bracket member 51 without a left side wall cannot be an obstacle, so that the ABS unit 10 and the sub-bracket member 52 can be pulled out to the left side.

### [Advantages of the embodiments]

(1) In the embodiment, the two bolts 76 and 77 inserted from the bottom wall 51a of the main bracket member 51 are unscrewed to the lower side, and one bolt 80 inserted into the rear end of the sub-bracket member 52 is unscrewed to the right side, so that the ABS unit 10 and the sub-bracket member 52 can be taken out from the main bracket member 51. Obstacle members are few in number at the time of insertion of the tool, so that the detaching operation is easy.
(2) The fuel tank 14 is only detached without detaching the engine 15, so that the ABS unit 10 and the sub-bracket member 52 can be easily taken out to the left side of the vehicle.
(3) The main bracket member 51 has the bottom wall 51a, the front wall 51b, and the right side wall 51c, so that a high rigidity can be obtained, the heavy ABS unit 10 can be supported strongly, and rattling due to vibration can be reduced.
(4) The input ports 21 and 23 and the output ports 22 and 24 for connecting the brake pipes are provided to the upper surface of the ABS unit 10, so that the brake piping operation is easy.
(5) The ABS unit 10 is arranged in the region surrounded by the outermost end line of the frame members 41a and 41a of the main frame 41, so that the ABS unit 10 can be protected.

### [Other embodiments]

(1) The ABS unit can also be fitted to the bracket 50 so that the input ports and the output ports are directed sideward.
(2) In the embodiment, the ABS unit 10 is arranged at the left rear end in the region surrounded by the outermost end line of the right and left frame members 41a and 41a in plan view. Since the brake pedal and the brake lever are typically arranged on the right side in the motorcycle, the ABS unit 10 is arranged on the right side, so that the brake piping can be simplified. However, typically, the clutch and the generator are often arranged on the right side of the crankcase. In this case, the ABS unit is advantageously arranged on the left side opposite the clutch and the generator.
(3) The positions of the first, second, and third attaching portions 81, 82, and 83 formed to the frame member 41a of the main frame 41 are not limited to the inner side surface of the frame member 41a, and can be on other surfaces except for the outermost hull surface of the main frame 41, e.g., on the upper surface or the lower surface thereof.
(4) In the two-divided type bracket 50, the forming positions of the first, second, and third attached portions 61, 62, and 63 for attaching the bracket 50 to the main frame 41 are not limited to the forming positions described in the first embodiment. For instance, when the sub-bracket member 52 can be pulled out to the left side from the main bracket member 51, the third attached portion 63 of the sub-bracket member 52 can be arranged on the lower side, the upper side, or the front side of the bracket 50.
(5) In the first embodiment, the ABS unit 10 and the sub-bracket member 52 are fixed onto the upper surface of the bottom wall 51a of the main bracket member 51. However, they can be fixed to the front side or the rear side of the main bracket member 51. That is, a joining portion of the main bracket member 51 and the ABS unit 10 and the sub-bracket member 52 can similarly be fixed to the front side or the rear side of the bracket.
(6) The main bracket member 51 of the bracket 50 preferably has two or more attached portions to the main frame 41. That is, although in the first embodiment, the main bracket member 51 has two attached portions to the main frame 41, it can have three or more attached portions.
(7) The hydraulic unit for brake is not limited to the ABS unit, and for example, a hydraulic unit of a hydraulic braking device for interlocking front and rear wheel brakes is applicable.

### Explanation of the Reference Numerals

1 Front wheel brake lever
2 Rear wheel brake pedal
3 Brake lever master cylinder
4 Brake pedal master cylinder
7 Front wheel disc braking device (wheel braking portion)
8 Rear wheel disc braking device (wheel braking portion)
15 Engine
18 Crankcase
21 Front wheel input port
22 Front wheel output port
23 Rear wheel input port
24 Rear wheel output port
30, 31, 32, 33 Brake pipe
38 Hydraulic pump
41 Main frame
41a, 41a Right and left frame members
50 Bracket
51 Main bracket member
52 Sub-bracket member
61 First attached portion (front attached portion or outside attached portion)
62 Second attached portion (inside attached portion)
63 Third attached portion (rear attached portion or inside attached portion)
71 Unit fixing portion
81, 82, 83 First, second, and third attaching portions

## Claims

1. A motorcycle comprising a main frame (41) having a pair of right and left frame members (41a, 41a), an engine (15) arranged below the main frame (41) and a hydraulic braking device, wherein
the hydraulic braking device has a hydraulic unit which incorporates a pump (38) which generates or increases an operating hydraulic pressure to a braking portion of a wheel, and
the hydraulic unit is arranged between the main frame (41) and a crankcase (18) of the engine (15) in the vertical direction and is attached to the main frame (41) so as to be detachable in the vehicle width direction
wherein the hydraulic unit (10) is attached to the main frame (41) via a bracket (50),
wherein the hydraulic unit (10) is arranged near one end of the main frame (41) in the vehicle width direction within the range surrounded by an outermost end line of the main frame (41) in the vehicle width direction,
**characterized in that**
the bracket (50) includes a main bracket member (51) attached to the main frame (41), and a sub-bracket member (52), to which the hydraulic unit (10) is attached, the sub-bracket member (52) being detachably attached to the main bracket member (51), and
wherein the hydraulic unit (10) can be detached from the main bracket member (51) together with the sub-bracket member (52) to which the hydraulic unit (10) is attached.

2. The motorcycle according to claim 1,
wherein the main frame (41) has an attaching portion for attaching the hydraulic unit,
wherein the attaching portion is formed in the portion except for an outermost end surface of the main frame (41).

3. The motorcycle according to any one of the preceding claims,
wherein the main bracket member (51) has an inside attached portion (62) arranged in an inside position in the vehicle width direction with respect to the attached hydraulic unit and attached to the main frame (41),
wherein at least one of the main bracket member (51) and the sub-bracket member (52) has an outside attached portion (61) arranged in an outside position in the vehicle width direction with respect to the attached hydraulic unit and attached to the main frame (41).

4. The motorcycle according to any one of the preceding claims,
wherein at least one of the main bracket member (51) and the sub-bracket member (52) has a front attached portion (61) arranged in a front position in the front-rear direction with respect to the attached hydraulic unit and attached to the main frame (41),
wherein at least one of the main bracket member (51) and the sub-bracket member (52) has a rear attached portion (63) arranged in a rear position in the front-rear direction with respect to the attached hydraulic unit and attached to the main frame (41).

5. The motorcycle according to any one of the preceding claims,
wherein one of the front attached portion (61) and the rear attached portion (63) and the inside attached portion (62) are formed to the main bracket member (51),
wherein the other of the front attached portion (61) and the rear attached portion (63) is formed to the sub-bracket member.

6. The motorcycle according to any one of the preceding claims,
wherein a joining portion (71) which detachably joins the sub-bracket member (52) to the main bracket member (51) is arranged on the lower side, the front side, or the rear side of the hydraulic unit.

7. The motorcycle according to claim 6,
wherein the entire hydraulic unit (10) is arranged in the space between the main frame (41) and the crankcase (18) of the engine (15) in the vertical direction in a side view of the motorcycle, and is arranged rearwards of a cylinder block (16) of the engine (15), and
wherein the joining portion (71) is arranged on the lower side of the hydraulic unit.

8. The motorcycle according to claim 3,
wherein the main frame (41) includes a cross member (43) connecting the right and left frame members (41a) and (41a),
wherein the hydraulic unit (10) provided on the bracket (50) is arranged near one end of the cross member (43) in a vehicle width direction, and is arranged on a front side of the cross member (43), and
wherein the inside attached portion (62) of the main bracket member (51) is attached to a front surface of the cross member (43).

9. The motorcycle according to claim 4,
wherein the main frame (41) includes a cross member (43) connecting the right and left frame members (41a) and (41a),
wherein the hydraulic unit (10) provided on the bracket (50) is arranged near one end of the cross member (43) in the vehicle width direction, and is arranged on a front side of the cross member (43),
wherein the front side attached portion (61) of the main bracket member (51) is arranged on the front side of the cross member (43), and
wherein the rear side attached portion (63) of the main bracket member (51) is arranged on the rear side of the cross member (43).

10. The motorcycle according to any one of claims 1 to 7,
the main frame (41) includes a cross member (43) connecting the right and left frame members (41a),
wherein a rear wheel operation side brake pipe (33) is connected to the hydraulic pressure unit (10), and
wherein the rear wheel operation side brake pipe (33) is arranged along the cross member (43).

## Patentansprüche

1. Motorrad mit einer Chassis (41) mit einem Paar rechter und linker Chassiselemente (41a, 41a), einem Motor (15), der unterhalb der Chassis (41) angeordnet ist, und einer hydraulischen Bremseinrichtung, wobei
die hydraulische Bremseinrichtung eine hydraulische Einheit hat, welche eine Pumpe (38) umfasst, welche einen hydraulischen Betriebsdruck zu einem Bremsabschnitt eines Rads erzeugt oder erhöht, und
die hydraulische Einheit zwischen der Chassis (41) und einem Kurbelkasten (18) des Motors (15) in der vertikalen Richtung angeordnet ist und sie an der Chassis (41) so angebracht ist, dass sie in der Breitenrichtung des Fahrzeugs lösbar ist,
wobei die hydraulische Einheit (10) an der Chassis (41) über eine Halterung (50) angebracht ist,
wobei die hydraulische Einheit (10) in der Nähe von einem Ende der Chassis (41) in der Breitenrichtung des Fahrzeugs innerhalb des Bereichs, der durch eine äußerste Endlinie der Chassis (41) in der Breitenrichtung des Fahrzeugs umgeben wird, angeordnet ist,
**dadurch gekennzeichnet, dass**
die Halterung (50) ein Haupthalterungselement (51), welches an der Chassis (41) angebracht ist, und ein Halterungs-Unterelement (52), an dem die hydraulische Einheit (10) befestigt ist, aufweist, wobei das Halterungs-Unterelement lösbar an dem Haupthalterungselement (51) angebracht ist und
wobei die hydraulische Einheit (10) von dem Haupthalterungselement (51) zusammen mit dem Halterungs-Unterelement (52), an dem die hydraulische Einheit (10) befestigt ist, gelöst werden kann.

2. Motorrad nach Anspruch 1,
wobei die Chassis (41) einen Anbringabschnitt zum Anbringen der hydraulischen Einheit hat,
wobei der Anbringabschnitt in dem Abschnitt mit der Ausnahme der äußersten Endoberfläche der Chassis (41) ausgebildet ist.

3. Motorrad nach einem der vorhergehenden Ansprüche,
wobei das Haupthalterungselement (51) einen inneren angebrachten Abschnitt (62) aufweist, der an einer inneren Position in der Breitenrichtung des Fahrzeugs mit Bezug auf die angebrachte hydraulische Einheit angeordnet ist und der an der Chassis (41) angebracht ist,
wobei das Haupthalterungselement (51) und/oder das Halterungs-Unterelement (52) einen äußeren angebrachten Abschnitt (61) aufweist, der an einer äußeren Position in der Breitenrichtung des Fahrzeugs mit Bezug auf die angebrachte hydraulische Einheit angeordnet ist und welcher an der Chassis (41) befestigt ist.

4. Motorrad nach einem der vorhergehenden Ansprüche,
wobei das Haupthalterungselement (51) und/oder das Halterungs-Unterelement (52) einen vorderen angebrachten Abschnitt (61) aufweist, der an einer vorderen Position in der Richtung nach vorne und nach hinten in Bezug auf die angebrachte hydraulische Einheit angeordnet ist und welcher an der Chassis (41) angebracht ist,
wobei das Haupthalterungselement (51) und/oder das Halterungs-Unterelement (52) einen hinteren angebrachten Abschnitt (63) aufweist, der an einer hinteren Position in der Richtung nach vorne und nach hinten in Bezug auf die angebrachte hydraulische Einheit angeordnet ist und welcher an der Chassis (41) angebracht ist.

5. Motorrad nach einem der vorhergehenden Ansprüche,
wobei einer unter dem vorderen angebrachten Abschnitt (61) und dem hinteren angebrachten Abschnitt (63) und dem inneren angebrachten Abschnitt (62) an dem Haupthalterungselement (51) ausgebildet sind,
wobei der andere unter dem vorderen angebrachten Abschnitt (61) und dem hinteren angebrachten Abschnitt (63) an dem Halterungs-Unterelement ausgebildet ist.

6. Motorrad nach einem der vorhergehenden Ansprüche,
wobei ein Verbindungsabschnitt (71), welcher das Halterungs-Unterelement (52) mit dem Haupthalterungselement (51) lösbar verbindet, auf der unteren Seite, der vorderen Seite oder der hinteren Seite der hydraulischen Einheit angeordnet ist.

7. Motorrad nach Anspruch 6,
wobei die gesamte hydraulische Einheit (10) in dem Raum zwischen der Chassis (41) und dem Kurbelkasten (18) des Motors (15) in der vertikalen Richtung in einer Seitenansicht des Motorrads angeordnet ist und sie hinter einem Zylinderblock (16) des Motors (15) angeordnet ist und
wobei der Verbindungsabschnitt (71) auf der unteren Seite der hydraulischen Einheit angeordnet ist.

8. Motorrad nach Anspruch 3,
wobei die Chassis (41) ein Querelement (43) aufweist, welches die rechten und linken Chassiselemente (41a) und (41a) verbindet,
wobei die hydraulische Einheit (10), die an der Halterung (50) vorgesehen ist, in der Nähe von einem Ende des Querelements (43) in einer Breitenrichtung des Fahrzeugs angeordnet ist und sie auf einer Vorderseite des Querelements (43) angeordnet ist und
wobei der innere angebrachte Abschnitt (62) des Haupthalterungselements (51) an einer vorderen Oberfläche des Querelements (43) angebracht ist.

9. Motorrad nach Anspruch 4,
wobei die Chassis (41) ein Querelement (43) aufweist, welches die rechten und linken Chassiselemente (41a) und (41a) verbindet,
wobei die hydraulische Einheit (10), die an der Halterung (50) vorgesehen ist, in der Nähe von einem Ende des Querelements (43) in der Breitenrichtung des Fahrzeugs angeordnet ist und sie auf einer Vorderseite des Querelements (43) angeordnet ist,
wobei der vordere angebrachte Abschnitt (61) des Haupthalterungselements (51) auf der vorderen Seite des Querelements (43) angeordnet ist und
wobei der hintere angebrachte Abschnitt (63) des Haupthalterungselements (51) auf der hinteren Seite des Querelements (43) angeordnet ist.

10. Motorrad nach einem der Ansprüche 1 bis 7,
wobei die Chassis (41) ein Querelement (43) aufweist, welches die rechten und linken Chassiselemente (41a) verbindet,
wobei eine Bremsröhre (33) auf der Seite der Betätigung des Hinterrads mit der hydraulischen Druckeinheit (10) verbunden ist und
wobei Bremsröhre (33) auf der Seite der Betätigung des Hinterrads entlang des Querelements (43) angeordnet ist.

## Revendications

1. Motocyclette comprenant un cadre principal (41) comportant une paire d'éléments de cadre droit et gauche (41a, 41a), un moteur (15) agencé sous le cadre principal (41) et un dispositif de freinage hydraulique, dans laquelle
le dispositif de freinage hydraulique comporte une unité hydraulique qui incorpore une pompe (38) qui génère ou augmente une pression hydraulique fonctionnelle sur une partie de freinage d'une roue, et
l'unité hydraulique est agencée entre le cadre principal (41) et un carter (18) du moteur (15) dans la direction verticale et est fixée sur le cadre principal (41) de façon à pouvoir être détachée dans le sens de la largeur du véhicule
dans laquelle l'unité hydraulique (10) est fixée sur le cadre principal (41) via un support (50),
dans laquelle l'unité hydraulique (10) est agencée près d'une extrémité du cadre principal (41) dans le sens de la largeur du véhicule dans la plage entourée par une ligne la plus extérieure du cadre principal (41) dans le sens de la largeur du véhicule,
**caractérisé en ce que**
le support (50) inclut un élément de support principal (51) fixé sur le cadre principal (41), et un élément de support secondaire (52), auquel l'unité hydraulique (10) est fixée, l'élément de support secondaire (52) pouvant être détaché de l'élément de support principal (51), et
dans laquelle l'unité hydraulique (10) peut être détachée de l'élément de support principal (51) conjointement avec l'élément de support secondaire (52) auquel l'unité hydraulique (10) est fixée.

2. Motocyclette selon la revendication 1,
dans laquelle le cadre principal (41) comporte une partie de fixation pour fixer l'unité hydraulique,
dans laquelle la partie de fixation est formée dans la partie en dehors d'une surface d'extrémité la plus extérieure du cadre principal (41).

3. Motocyclette selon l'une quelconque des revendications précédentes,
dans laquelle l'élément de support principal (51) comporte une partie fixée à l'intérieur (62) agencée dans une position intérieure dans le sens de la largeur du véhicule par rapport à l'unité hydraulique fixe et fixée sur le cadre principal (41),
dans laquelle au moins l'un de l'élément de support principal (51) et de l'élément de support secondaire (52) comporte une partie fixée à l'extérieur (61) agencée dans une position extérieure dans le sens de la largeur du véhicule par rapport à l'unité hydraulique fixée et fixée sur le cadre principal (41).

4. Motocyclette selon l'une quelconque des revendications précédentes,
dans laquelle au moins l'un de l'élément de support principal (51) et de l'élément de support secondaire (52) comporte une partie fixée avant (61) agencée dans une position avant dans la direction avant-arrière par rapport à l'unité hydraulique fixée et fixée sur le cadre principal (41),
dans laquelle au moins l'un de l'élément de support principal (51) et de l'élément de support secondaire (52) comporte une partie fixée arrière (63) agencée dans une position arrière dans la direction avant-arrière par rapport à l'unité hydraulique fixée et fixée sur le cadre principal (41).

5. Motocyclette selon l'une quelconque des revendications précédentes,
dans laquelle l'une de la partie fixée avant (61) et la partie fixée arrière (63) et la partie fixée à l'intérieur (62) sont formées sur l'élément de support principal (51),
dans laquelle l'autre de la partie fixée avant (61) et la partie fixée arrière (63) est formée sur l'élément de support secondaire.

6. Motocyclette selon l'une quelconque des revendications précédentes,
dans laquelle une partie de jonction (71) qui joint de manière détachable l'élément de support secondaire (52) à l'élément de support principal (51) est agencée sur le côté inférieur, le côté avant, ou le côté arrière de l'unité hydraulique.

7. Motocyclette selon la revendication 6,
dans laquelle l'unité hydraulique (10) entière est agencée dans l'espace entre le cadre principal (41) et le carter (18) du moteur (15) dans la direction verticale dans une vue de côté de la motocyclette et est agencée vers l'arrière d'un bloc cylindre (16) du moteur (15), et
dans laquelle la partie de jonction (71) est agencée sur le côté inférieur de l'unité hydraulique.

8. Motocyclette selon la revendication 3,
dans laquelle le cadre principal (41) inclut un élément transversal (43) reliant les éléments de cadre droit et gauche (41a) et (41a),
dans laquelle l'unité hydraulique (10) placée sur le support (50) est agencée près d'une extrémité de l'élément transversal (43) dans le sens de la largeur du véhicule, et est agencée sur un côté avant de l'élément transversal (43), et
dans laquelle la partie fixée à l'intérieur (62) de l'élément de support principal (51) est fixée sur une surface avant de l'élément transversal (43).

9. Motocyclette selon la revendication 4,
dans laquelle le cadre principal (41) inclut un élément transversal (43) reliant les éléments de cadre droit et gauche (41a) et (41a),
dans laquelle l'unité hydraulique (10) placée sur le support (50) est agencée près d'une extrémité de l'élément transversal (43) dans le sens de la largeur du véhicule, et est agencée sur un côté avant de l'élément transversal (43), et
dans laquelle la partie fixée avant (61) de l'élément de support principal (51) est agencée sur le côté avant de l'élément transversal (43), et
dans laquelle la partie fixée arrière (63) de l'élément de support principal (51) est agencée sur le côté arrière de l'élément transversal (43).

10. Motocyclette selon l'une quelconque des revendications 1 à 7,
le cadre principal (41) inclut un élément transversal (43) reliant les éléments de cadre droit et gauche (41a),
dans laquelle un tuyau de frein (33) côté actionnement de la roue arrière est connecté à l'unité hydraulique (10), et
dans laquelle un tuyau de frein (33) côté actionnement de la roue arrière est agencé le long de l'élément transversal (43).
